(19) **Europäisches Patentamt / European Patent Office / Office européen des brevets**

(11) **EP 4 131 757 A1**

(12) **EUROPEAN PATENT APPLICATION**

(43) Date of publication:
**08.02.2023 Bulletin 2023/06**

(21) Application number: **22464001.1**

(22) Date of filing: **15.07.2022**

(51) International Patent Classification (IPC):
**H02M 1/32** *(2007.01)*    **H02M 1/36** *(2007.01)*
**H02M 1/00** *(1968.09)*    **H02J 1/10** *(1968.09)*
**H02M 3/28** *(1968.09)*    **H02M 3/158** *(1985.01)*

(52) Cooperative Patent Classification (CPC):
**H02M 1/008; H02J 1/10; H02M 1/0003; H02M 1/32;**
**H02M 1/36; H02M 3/1584; H02M 3/285;**
**H02J 1/001**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **04.08.2021 RO 202100462**

(71) Applicant: **Stefan cel Mare University of Suceava**
**720229 Suceava, County Suceava (RO)**

(72) Inventors:
• **Bejenar, Ciprian**
  **mun. Suceava, Jud Suceava (RO)**
• **Milici, Dan Laurentiu**
  **jud. Suceava (RO)**
• **Filote, Constantin**
  **mun Suceava, jud. Suceava (RO)**
• **Rata, Mihai**
  **mun. Suceava, jud Suceava (RO)**
• **Afanasov, Ciprian**
  **jud. Suceava (RO)**
• **Lupu, Elena-Daniela**
  **jud. Suceava (RO)**
• **Vlad, Valentin**
  **mun. Suceava, jud. Suceava (RO)**
• **Ungureanu, Constantin**
  **mun. Suceava, jud. Suceava (RO)**

(54) **METHOD FOR SELECTIVE SWITCHING**

(57)    *Summary:* Method for selective switching, according to the invention, it assumes the selective switching (connection/disconnection) of voltage sources and/or converter modules controllable and connected in parallel in the composition of power supply systems, on the basis of conditional events with attenuated transition modeled in a specific manner, so that it involves mathematical functions that composes a sigmoidal control logic approached differently, providing it simplicity and performance along with malleability, without unpredictable, uncontrolled and unjustified compromises, improving the switching process without additional implications, so that it does not involve the control of electromechanical devices because it improves the compatibility, performance and redundancy in operation of the systems or parts thereof that implement it.

The summary of the invention will be published together with figure 1 and figure 2.

Fig. 1

**(Cont. next page)**

EP 4 131 757 A1

Fig. 2

2

**Description**

The invention relates to a method for the selective switching (connection/disconnection) of voltage sources and/or of converter modules controllable and connected in parallel in the composition of power supply systems, which involves events whose transition is modeled in a specific manner.

In the purpose of selective switching (connection/disconnection) of voltage sources and/or of converter modules controllable and connected in parallel, there are known several solutions (US10135293B2, US10340808B2, CN112531878A) which consists, mainly, of switching methods involving events whose transition is instantaneous, linear and/or nonlinear, which is modeled on the shape of step mathematical functions and/or transfer functions acting as pass filters.

Some of the disadvantages of the described solutions are related to that conditional switching methods they describe can introduce and present significant disturbances of the electrical parameters and indicators relevant for the quality of electrical energy at the output of the power supply systems that implement them and/or unpredictable delays in the response that they offer compared to the imposed response, especially when the evolution of an event is suddenly changed, during the switching (connection/disconnection) of voltage sources and/or of converter modules controllable and connected in parallel in their composition, as well as because it involves the command of some electronic devices in combination with the command of some electromechanical devices.

At the same time, from the point of view of mathematical modeling, an approachable solution is known in the form of a sigmoid mathematical function, defined and determinable, as it is described by the general form of equation (1), for which it may be involved in multiple applications due to some potential advantages, mainly, because it has a symmetrical and flexible character, so it is suitable in modeling and controlling transition events during switching (connection/disconnection) of voltage sources and/or of converter modules controllable and connected in parallel in the composition of power supply systems, because it is flexible.

$$f(x) = \frac{1}{1 + e^{-x}} \qquad\qquad (1)$$

The disadvantage of the described solution by the general form of equation (1) consists of that it is not exactly an ideal solution to be implemented in modeling of conditional events with attenuated transition because it requires a different approach, but at the same time compatible with its form so that the result is suitable for such applications.

The invention solves, mainly, a technical problem by which it allows the selective switching (connection/disconnection) of voltage sources and/or of converter modules controllable and connected in parallel in the composition of power supply systems, in that it does not introduce and does not present significant disturbances of the electrical parameters at the output of the power supply systems that implement them and/or unpredictable delays in the response they offer compared to the imposed response.

Method for selective switching, according to the invention, it surprises the presented disadvantages and problems in that it assumes, mainly, introduction of the capability to selectively switch (connect/disconnect) voltage sources and/or converter modules controllable and connected in parallel in the composition of power supply systems, on the basis of conditional events with attenuated transition modeled in a specific manner, so that it involves mathematical functions that composes a sigmoidal control logic approached differently, providing it simplicity and performance along with malleability, without unpredictable, uncontrolled and unjustified compromises, improving the switching process without additional implications, so that it does not involve the control of electromechanical devices because it improves the compatibility, performance and redundancy in operation of the systems or parts thereof that implement it.

The invention has the following advantages:

- The method assumes conditional events with attenuated transition, which are modeled only with mathematical functions, so that it provides accuracy and predictability in operation because the models it is based on are mainly composed of defined and malleable functions that relate to other defined and malleable functions, without passing filters and within the limits of certain conditions;
- The method involves a different approach in modeling conditional events with attenuated transition so that it can be an ideal solution for selective switching (connection/disconnection) of voltage sources and/or of converter modules controllable and connected in parallel in the composition of power supply systems;
- The method is simple and efficient in that it is not difficult to implement and it is neither an intensive resource consumer;
- The method is malleable in the purpose of selective switching (connection/disconnection) of voltage sources and/or of converter modules controllable and connected in parallel in the composition of power supply systems, due to the adaptability it has in meeting specific conditions for switching (connection/disconnection) them;
- The method does not introduce and does not present unpredictable delays from the moment of meeting the trigger conditions, the moment of initiating the switching and until the moment of the effective switching, which has an instantaneous and identical response to the response imposed as reference, therefore devoid of other transition phenomena;

- The method imposes a controlled variation of the specific electrical parameters for the circulated electrical energy corresponding to those power supply systems or parts thereof for which it is implemented, in the purpose of selective switching (connection/disconnection) of voltage sources and/or of converter modules controllable and connected in parallel in their composition;

- The method modifies in the sense of improving the disturbances of electrical parameters and indicators relevant for the quality of electrical energy at the output of the power supply systems that implement it, during the switching (connection/disconnection) of voltage sources and/or converter modules controllable and connected in parallel in their composition;

- The method facilitates the behavior of the regulators elements for the power supplying process of an electrical load in the case of power supply systems that implement it, during the switching (connection/disconnection) of voltage sources and/or converter modules controllable and connected in parallel in their composition;

- The method sensitizes the reaction and improves the response of the equipment and/or protection systems, so that, indirectly, it facilitates the detection of electrical faults (e.g. electrical insulation fault) during switching (connection/disconnection), due to the events with attenuated transition when switching on or off the voltage of a part of the power supply system for which it is implemented, that initially limits their violent manifestation in the case of their occurrence;

- The method does not involve the command of electromechanical devices (e.g. electrical contacts), but only the command of electronic devices (e.g. electronic modules) for selective switching (connection/disconnection) of voltage sources and/or of converter modules controllable and connected in parallel in the composition of power supply systems;

- The method increases the service life, while it reduces the maintenance costs of the power supply systems or parts thereof for which it is implemented;

- The method may increase the operational performance of the power supply systems or parts thereof for which it is implemented, without the need of introducing an improved generation of devices and/or equipment in their composition;

- The method can facilitate the redundancy in operation of the power supply systems or parts thereof, through that it is extensible;

- The method is compatible with other ordinary control methods and does not limit their performances or of other power supply systems in which it is implemented.

Below is further given an embodiment of the invention in connection with the following figures:

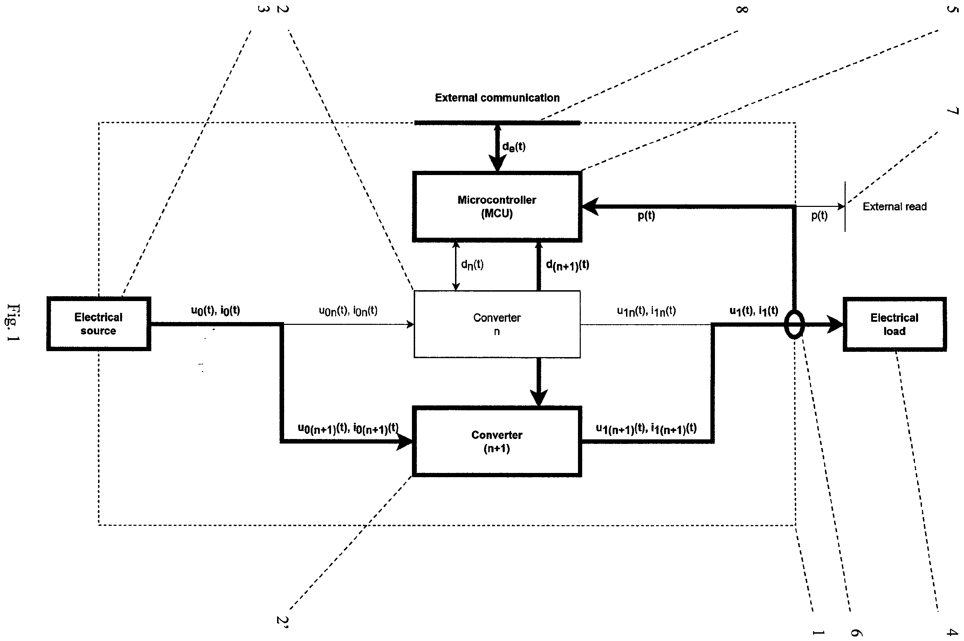

- Fig. 1 - Architecture of a power supply system with voltage sources and/or converter modules controllable and connected in parallel, that can implement the method for selective switching;

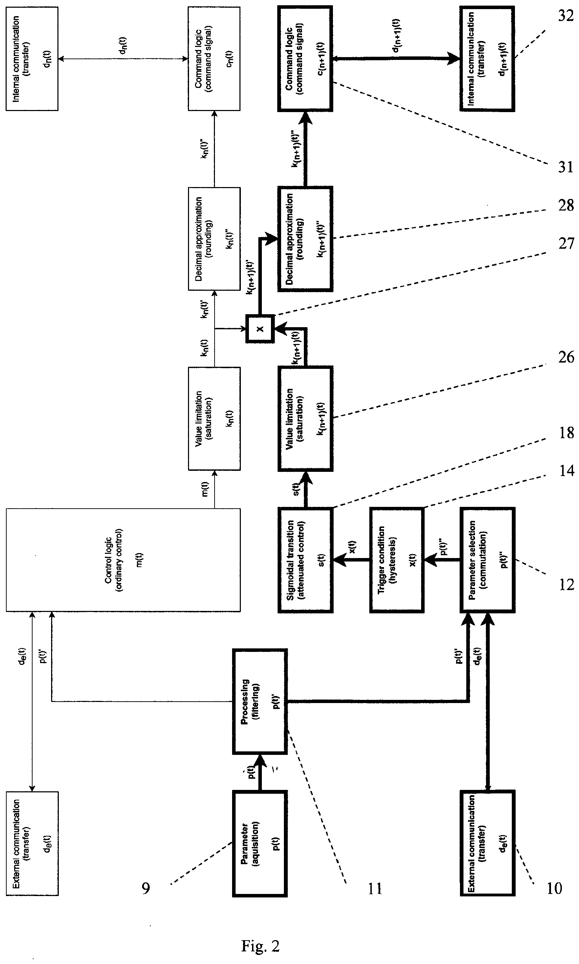

- Fig. 2 - General diagram of the method for selective switching;

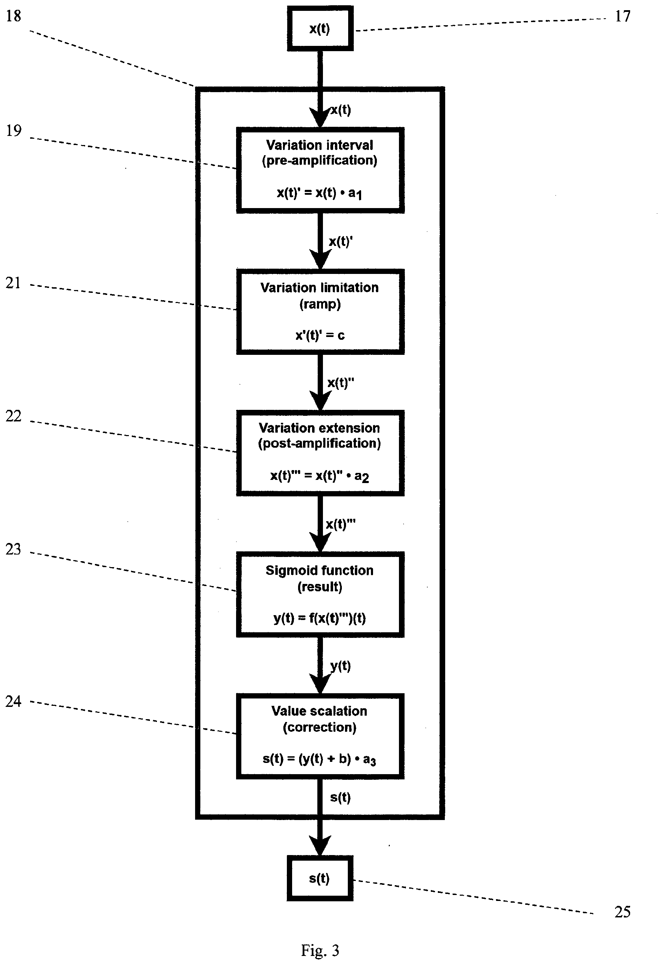

- Fig. 3 - Specific diagram of the elements for the attenuated transition during switching, as part of the selective switching method;

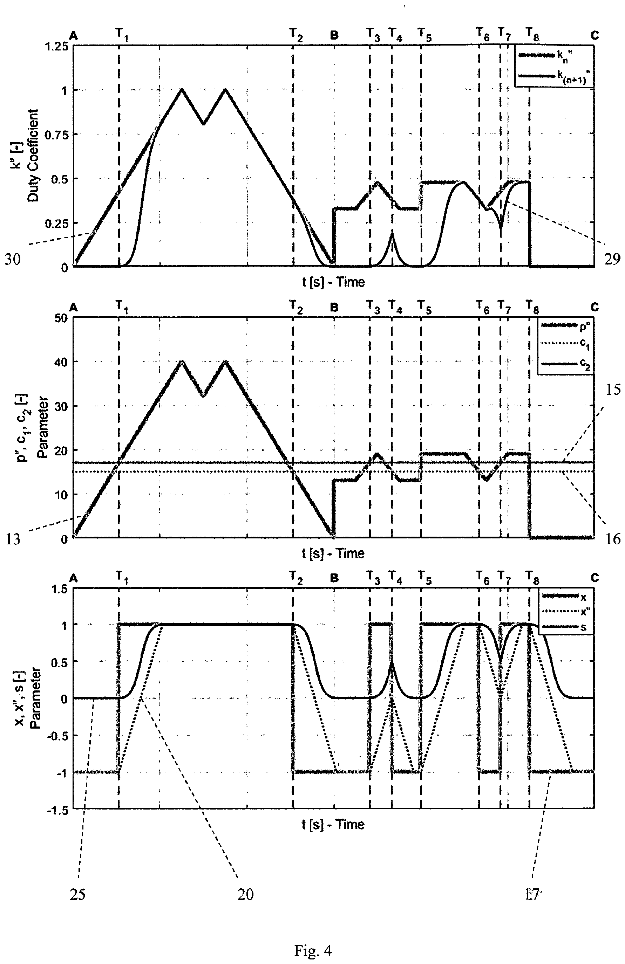

- Fig. 4 - Detailed diagram describing the behavior of the method for selective switching.

The invention involves, mainly, a power supply system 1 characterized by the electrical parameters $u_1(t)$ and $i_1(t)$, which can be made up, mainly, of the primary power supply and/or of converter module 2, characterized by the electrical parameters $u_{0n}(t)$ and $i_{0n}(t)$ and from as many (minimum 1) secondary power supplies and/or converter modules 2', characterized by the electrical parameters $u_{(n+1)}(t)$ and $i_{0n}(t)$, which are elements controllable and connected in parallel, intermediate between the electrical source 3, characterized by the electrical parameters $u_0(t)$ and $i_0(t)$ and the electrical load 4, characterized by the same electrical parameters as those of the power supply system 1 from which is supplied, so that each is controlled in real time and in parallel by the microcontroller 5 through internal communication channels transmitting a primary data string, whose instantaneous value is considered $d_n(t)$ and secondary data strings, whose instantaneous values are considered $d_{(n+1)}(t)$, because they are composed according to defined rules and/or methods that are followed, so that for its implementation, the microcontroller 5 acquires and monitors a relevant electrical parameter $p$ whose instantaneous value is considered $p(t)$, from the point of acquisition 6 which is located between the power supply system 1 and the electrical load 4, from where it can also be acquired and monitored by an operator interface and/or an equipment and/or a third-party system after it is transferred through the external communication channel 7 and from which it acquires the relevant data string $d_e(t)$ after it is transferred through the external communication channel 8, which also includes data about the relevant electrical parameter $p$, previously acquired and processed externally.

Method for selective switching, is characterized mainly, in that it exists and is accessible a relevant electrical parameter **p** to be acquired for the purpose of monitoring the electrical load 4 connected at the output of the power supply system 1, considered the reference and the triggering event after which the selective switching (connection/disconnection) is performed for as many (minimum 1) secondary voltage sources and/or converter modules 2' controllable, in real time and in parallel, other than the primary voltage source and/or the converter module 2 controllable, whose instantaneous value is either considered $p(t)$, when the electrical parameter is acquired 9 by the microcontroller 5 of the power supply system 1 from the acquisition point 6, or it is extracted from the relevant data string $d_e(t)$ which is obtained through transfer 10, because it can be previously acquired and processed externally and then available through the external communication channel 8 connected to an operator interface and/or an equipment and/or a third-party system, so that in the first case it is supplementary processed 11, after which its instantaneous value is considered $p(t)'$, fact for which the accessible source of the relevant electrical parameter **p** can be selected 12, then its instantaneous value 13 is considered $p(t)''$, which further, according to a specific control logic, is compared 14 when increases to the trigger value 15 defined $c_2$ and when decreases to the trigger value 16 defined $c_1$, where the trigger value $c_1$ is lower than the trigger value $c_2$ ($c_1 < c_2$) and the trigger value $c_1$ is different from the trigger value $c_2$ ($c_1 \neq c_2$), both specific for each secondary voltage source and/or converter module 2', defined so that the result 17 of meeting the trigger conditions compose a trigger logic with hysteresis cycle, which is consisted of the instantaneous value $x(t)$, which, as the case may be, is equal by definition to a constant **h** positive when it is greater than or equal to the trigger value $c_2$ (if $p(t)'' \geq c_2$, then $x(t) = h$), or negative when it is less than or equal to the trigger value $c_1$ (if $p(t)'' \leq c_1$, then $x(t) = -h$), which further serves as a reference to outline in a specific way the sigmoidal control logic that is based on the event 18 with attenuated transition of sigmoidal shape, which is expressed within the limits imposed by the variation interval 19 by pre-amplifying the instantaneous value $x(t)$ with an amplification factor $a_1$ defined to form the instantaneous value $x(t)'$ whose variation 20 is limited 21 further by imposing a maximum slope $x'(t)'$ which is equal by definition with a constant c, to form the instantaneous value $x(t)''$, whose variation is extended 22 further by post-amplifying it with an amplification factor $a_2$ defined to form the instantaneous value $x(t)'''$, which serves for the purpose of composing 23 a sigmoid function $f(x(t)''')(t)$, as it is defined by equation (1), for which its instantaneous value $y(t)$ is in addition scaled 24 further by adding a correction factor **b** (positive, zero or negative) and/or by amplifying it with an amplification factor $a_3$ (supraunitary, unitary or subunitary) defined for obtaining the attenuated control 25, whose instantaneous value is considered $s(t)$, which is limited 26 in a defined interval, to form the instantaneous value $k_{(n+1)}(t)$, in parallel with the existence of the instantaneous value $k_n(t)$ (constituted in similar or equivalent steps, but which implies an ordinary control logic), but which relates to it because it follows its evolution over time due to the product 27 between the two, the result of which is the instantaneous value $k_{(n+1)}(t)'$, which is rounded 28 through decimal approximation so that is obtained the duty coefficient 29 whose instantaneous value is considered $k_{(n+1)}(t)''$, specific for the selective control of a secondary voltage source and/or converter module 2', in parallel with the duty coefficient 30 whose instantaneous value is considered $k_n(t)''$, specific for the permanent control of a primary voltage source and/or converter module 2 (constituted in similar or equivalent steps, but which implies an ordinary control logic), which is further used accordingly in command logic 31, which communicates with an electronic module that it controls via the internal communication channel 32, through which is transferred the secondary data string $d_{(n+1)}(t)$ which comprises the instantaneous value of the command of the electronic elements in its composition considered $c_{(n+1)}(t)$ and/or other relevant data for the implementation of command logic 31, whatever it may be.

The invention involves, mainly, a specific method for selective switching (slave) that follows an ordinary control method (master) that is leading, for which when starting the power supply system that implements it under normal conditions characteristic is the moment A - $T_1$, when stopping under normal conditions characteristic is the moment $T_2$ - B and when stopping under forced conditions characteristic is the moment $T_8$ - **C**, because the microcontroller 5 can increase or decrease the duty coefficients $k_n(t)''$ and $k_{(n+1)}(t)''$, therefore it can change the characteristic electrical parameters of the power supply system 1, respectively of the voltage sources and/or of the converter modules 2 and 2' of its composition and when the relevant electrical parameter $p(t)''$ has a value greater than or equal to the trigger value $c_2$ ($p(t)'' \geq c_2$) (moment $T_1$, $T_3$ and $T_5$), the selective switching takes place by transitively connecting the voltage source and/or the converter module 2', but which if it is interrupted when the relevant parameter $p(t)''$ has a value less than or equal to the trigger value $c_1$ ($p(t)'' \leq c_1$) (moment $T_4$) the transition continues in reverse and without delay from the point at which it was interrupted, towards the sense of disconnection, but so that in transition the duty coefficient $k_{(n+1)}(t)''$ is nonzero because it follows through ratio the duty coefficient $k_n(t)''$ and after completion of connection it has its value (moment $T_1$ - $T_2$, $T_5$ - $T_6$ and $T_8$) until is otherwise imposed, when the relevant parameter $p(t)''$ has a value less than or equal to the trigger value $c_1$ ($p(t)'' \leq c_1$) (moment $T_2$, $T_6$ and $T_8$), the selective switching takes place by transitively disconnecting the voltage source and/or the converter module 2', but which if it is interrupted when the relevant parameter $p(t)''$ has a value greater than or equal to the trigger value $c_2$ ($p(t)'' \geq c_2$) (moment $T_7$) the transition continues in reverse and without delay from the point at which it was interrupted, towards the sense of connection, but so that in transition the duty coefficient $k_{(n+1)}(t)''$ is nonzero because it follows through ratio the duty coefficient $k_n(t)''$ and after completion of disconnection, it is zero until is otherwise imposed.

Method for selective switching, according to the invention, can be reproduced with the same performances and characteristics for any application compatible with it or its parts thereof.

Method for selective switching, according to the invention, can be reproduced with the same performances and characteristics whenever is necessary, which denotes industrial applicability.

## Claims

1. Method for selective switching, **characterized in that**, it exists and is accessible a relevant electrical parameter $p$ to be acquired for the purpose of monitoring the electrical load (4) connected at the output of the power supply system (1), considered the reference and the triggering event after which the selective switching (connection/disconnection) is performed for as many (minimum 1) secondary voltage sources and/or converter modules (2') controllable, in real time and in parallel, other than the primary voltage source and/or the converter module (2) controllable, whose instantaneous value is either considered $p(t)$, when the electrical parameter is acquired (9) by the microcontroller (5) of the power supply system (1) from the acquisition point (6), or it is extracted from the relevant data string $d_e(t)$ which is obtained through transfer (10), because it can be previously acquired and processed externally and then available through the external communication channel (8) connected to an operator interface and/or an equipment and/or a third-party system, so that in the first case it is supplementary processed (11), after which its instantaneous value is considered $p(t)'$, fact for which the accessible source of the relevant electrical parameter $p$ can be selected (12), then its instantaneous value (13) is considered $p(t)''$, that serves for obtaining the attenuated control (25), whose instantaneous value is considered $s(t)$, which is limited (26) in a defined interval, to form the instantaneous value $k_{(n+1)}(t)$, in parallel with the existence of the instantaneous value $k_n(t)$ (constituted in similar or equivalent steps, but which implies an ordinary control logic), but which relates to it because it follows its evolution over time due to the product (27) between the two, the result of which is the instantaneous value $k_{(n+1)}(t)'$, which is rounded (28) through decimal approximation so that is obtained the duty coefficient (29) whose instantaneous value is considered $k_{(n+1)}(t)''$, specific for the selective control of a secondary voltage source and/or converter module (2'), in parallel with the duty coefficient (30) whose instantaneous value is considered $k_n(t)''$, specific for the permanent control of a primary voltage source and/or converter module (2) (constituted in similar or equivalent steps, but which implies an ordinary control logic), which is further used accordingly in command logic (31), which communicates with an electronic module that it controls via the internal communication channel (32), through which is transferred the secondary data string $d_{(n+1)}(t)$ which comprises the instantaneous value of the command of the electronic elements in its composition considered $c_{(n+1)}(t)$ and/or other relevant data for the implementation of command logic (31), whatever it may be.

2. Sigmoidal control logic, **characterized in that**, instantaneous value (13) considered $p(t)''$ is compared (14) when increases to the trigger value (15) defined $c_2$ and when decreases to the trigger value (16) defined $c_1$, where the trigger value $c_1$ is lower than the trigger value $c_2$ ($c_1 < c_2$) and the trigger value $c_1$ is different from the trigger value $c_2$ ($c_1 \neq c_2$), both specific for each secondary voltage source and/or converter module 2', defined so that the result (17) of meeting the trigger conditions compose a trigger logic with hysteresis cycle, which is consisted of the instantaneous value $x(t)$, which, as the case may be, is equal by definition to a constant $h$ positive when it is greater than or equal to the trigger value $c_2$ (if $p(t)'' \geq c_2$, then $x(t) = h$), or negative when it is less than or equal to the trigger value $c_1$ (if $p(t)'' \leq c_1$, then $x(t) = -h$), which further serves as a reference to outline in a specific way the sigmoidal control logic that is based on the event (18) with attenuated transition of sigmoidal shape, which is expressed within the limits imposed by the variation interval (19) by pre-amplifying the instantaneous value $x(t)$ with an amplification factor $a_1$ defined to form the instantaneous value $x(t)'$ whose variation (20) is limited (21) further by imposing a maximum slope $x'(t)'$ which is equal by definition with a constant $c$, to form the instantaneous value $x(t)''$, whose variation is extended (22) further by post-amplifying it with an amplification factor $a_2$ defined to form the instantaneous value $x(t)'''$, which serves for the purpose of composing (23) a sigmoid function $f(x(t)''')(t)$, as it is defined by equation (1), for which its instantaneous value $y(t)$ is in addition scaled (24) further by adding a correction factor $b$ (positive, zero or negative) and/or by amplifying it with an amplification factor $a_3$ (supraunitary, unitary or subunitary) defined for obtaining the attenuated control (25), whose instantaneous value is considered $s(t)$.

3. Method for selective switching, according to claim 1, **characterized in that**, the microcontroller (5) can increase or decrease the duty coefficients $k_n(t)''$ and $k_{(n+1)}(t)''$, therefore it can change the characteristic electrical parameters of the power supply system (1), respectively of the voltage sources and/or of the converter modules (2) and (2') of its composition and when the relevant electrical parameter $p(t)''$ has a value greater than or equal to the trigger value $c_2$ ($p(t)'' \geq c_2$) (moment $T_1$, $T3$ and $T_5$), the selective switching takes place by transitively connecting the voltage source and/or the converter module (2'), but which if it is interrupted when the relevant parameter $p(t)''$ has a value less than or equal to the trigger value $c_1$ ($p(t)'' \leq c_1$) (moment $T_4$) the transition continues in reverse and without delay from the point at which it was interrupted, towards the sense of disconnection, but so that in transition the duty coefficient $k_{(n+1)}(t)''$ is nonzero because it follows through ratio the duty coefficient $k_n(t)''$ and after completion of connection it has its value (moment $T_1$ - $T_2$, $T_5$ - $T_6$ and $T_8$) until is otherwise imposed, when the relevant parameter $p(t)''$ has a value less than or equal to the trigger value $c_1$ ($p(t)'' \leq c_1$) (moment $T_2$, $T_6$ and $T_8$), the selective switching takes place by transitively disconnecting the voltage source and/or the converter module (2'), but which if it is interrupted when the relevant parameter $p(t)''$ has a value greater than or equal to the trigger value $c_2$ ($p(t)'' \geq c_2$) (moment $T_7$) the transition continues in reverse and without delay from the point at which it was interrupted, towards the sense of connection, but so that in transition the duty coefficient $k_{(n+1)}(t)''$ is nonzero because it follows through ratio the duty coefficient $k_n(t)''$ and after completion of disconnection, it is zero until is otherwise imposed.

4. Method for selective switching, **characterized in that**, it introduces the capability to selectively switch (connect/disconnect) voltage sources and/or converter modules controllable and connected in parallel in the composition of power supply systems, on the basis of conditional events with attenuated transition modeled in a specific manner, so that it involves mathematical functions that composes a sigmoidal control logic approached differently, providing it simplicity and performance along with malleability, without unpredictable, uncontrolled and unjustified compromises, improving the switching process without additional implications, so that it does not involve the control of electromechanical devices because it improves the compatibility, performance and redundancy in operation of the systems or parts thereof that implement it.

Fig. 1

Fig. 2

Fig. 3

Fig. 4

Europäisches Patentamt

European Patent Office

Office européen des brevets

# EUROPEAN SEARCH REPORT

Application Number

EP 22 46 4001

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 002 263 B2 (MICREL INC [US]) 21 February 2006 (2006-02-21) * figure 4B * | 1-4 | INV. H02M1/32 H02M1/36 H02M1/00 |
| X | US 2010/013304 A1 (HEINEMAN DOUGLAS E [US]) 21 January 2010 (2010-01-21) * figures 7, 15, 21 * | 1-4 | H02J1/10 H02M3/28 H02M3/158 |
| X | GUI HAN-DONG ET AL: "An optimized efficiency-based control strategy for islanded paralleled PV micro-converters", 2015 IEEE APPLIED POWER ELECTRONICS CONFERENCE AND EXPOSITION (APEC), IEEE, 15 March 2015 (2015-03-15), pages 229-234, XP032775156, DOI: 10.1109/APEC.2015.7104356 [retrieved on 2015-05-08] * figure 9 * | 1-4 | |

TECHNICAL FIELDS SEARCHED (IPC)

H02M
H02J

The present search report has been drawn up for all claims

| Place of search | Date of completion of the search | Examiner |
|---|---|---|
| The Hague | 30 November 2022 | Madouroglou, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 46 4001

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2022

| Patent document cited in search report | | Publication date | Patent family member(s) | | Publication date |
|---|---|---|---|---|---|
| US 7002263 | B2 | 21-02-2006 | EP | 1605571 A1 | 14-12-2005 |
| | | | JP | 2005354894 A | 22-12-2005 |
| | | | US | 2005275290 A1 | 15-12-2005 |
| US 2010013304 | A1 | 21-01-2010 | CN | 101686012 A | 31-03-2010 |
| | | | CN | 103607119 A | 26-02-2014 |
| | | | DE | 202009009855 U1 | 24-12-2009 |
| | | | TW | 201009558 A | 01-03-2010 |
| | | | TW | 201525676 A | 01-07-2015 |
| | | | US | 2010013304 A1 | 21-01-2010 |

EPO FORM P0459

For more details about this annex : see Official Journal of the European Patent Office, No. 12/82

**REFERENCES CITED IN THE DESCRIPTION**

**Patent documents cited in the description**

- US 10135293 B2
- US 10340808 B2
- CN 112531878 A